# DEMANDE DE BREVET EUROPEEN

(11) **EP 1 084 993 A1**
(43) Date de publication de la demande: **21.03.2001**
(21) Numéro de dépôt: 99870187.4
(22) Date de dépôt: 14.09.1999
(51) Int. Cl.: C02F 1/46

(54) **Dispositif et procédé de traitement de lisier**

(71) Demandeur: Eco Flanders S.A., 8600 Diskmuide (BE)
(72) Inventeur: Debillemont, Paul, 7890 Ellezelles (BE)
(74) Mandataire: Van Reet, Joseph

(57) **Abrégé**

L'invention concerne un dispositif de traitement de lisier comprenant un système électrolytique avec des séries d'électrodes. Au moins une partie des électrodes est constituée par des électrodes solubles en alliage de magnésium. L'invention concerne également un procédé de traitement de lisier, dans lequel on soumet le lisier à un traitement électrolytique avec électrodes. Le lisier est appliqué dans des électrodes solubles en alliage de magnésium.

## Description

La présente invention se rapporte à un dispositif de traitement de lisier comprenant un système électrolytique avec des séries d'électrodes.

La présente invention vise en particulier à traiter différents types de lisiers pour en extraire, d'une part, une fraction solide, complètement hygiénisée, c'est-à-dire exempte de toute bactérie pathogène, pouvant facilement être épandue sur des terrains agricoles et contenant des nutriments en proportion telle qu'elle corresponde à un apport idéal pour les plantes et, d'autre part, une fraction liquide répondant aux normes en vigueur en matière d'épuration d'eaux.

Les élevages intensifs produisent des quantités de lisiers souvent très difficiles à traiter par voie biologique parce qu'ils contiennent des quantités parfois appréciables d'antibiotiques, de cuivre et de zinc contenus dans les aliments non assimilés par les animaux et rejetés tels quels dans leurs excréments. Ces antibiotiques et ce cuivre apportent donc une action antiseptique non négligeable. Ces composés, fortement toxiques, non biodégradables polluent progressivement les nappes aquifères et les eaux de surface.

La caractéristique essentielle des lisiers est de présenter un rapport de demande chimique en oxygène (DCO) par rapport à une demande biologique en oxygène après 5 jours (DBO₅) très élevé, souvent au-dessus de 20, ceci prouvant la difficulté de biodégradation des éléments polluants. De plus, l'ammoniac, présent souvent à forte dose, notamment dans les lisiers dits "jeunes" ne peut aboutir qu'à la formation de nitrates, éléments gênants lorsqu'ils se retrouvent dans les eaux de surface.

Un dispositif de traitement de lisier comprenant un système électrolytique avec des séries d'électrodes est connu du document WO 95/05347. Dans le système connu, on utilise des électrodes solubles en métal, de préférence composées de fer ou d'aluminium.

Un inconvénient du système connu est qu'il ne permet pas d'éliminer suffisamment la formation de nitrates due à la présence importante d'ammoniac.

La présente invention vise à éliminer autant que possible la formation de nitrates.

Ceci est rendu possible en prévoyant qu'au moins une partie des électrodes est constituée par des électrodes solubles en alliage de magnésium. De tels électrodes font en sorte que l'ammoniac, encore présent dans le lisier, est précipité sous la forme d'un composé insoluble stable, à savoir du phosphate-ammoniaco-magnésium (MgNH₄PO₄) que l'on retrouve dans les boues, en compagnie d'autres éléments, tels que le cuivre, le zinc et le fer. Ces autres éléments apportent les oligo-éléments nécessaires à une bonne croissance des végétaux.

De préférence, les séries d'électrodes sont constituées de deux séries de composition différente, une première série constituant les électrodes solubles en alliage de magnésium et une deuxième série d'électrodes composées en particulier de fer. Ceci permet d'obtenir de résultats tout à fait satisfaisant en limitant les coûts des électrodes, car les électrodes à base de magnésium sont plus onéreuses.

Selon une forme de réalisation préférentielle du dispositif de l'invention, chacune des séries d'électrodes est montée entre deux cloisons, les cloisons étant agencées à guider le lisier provenant d'un sens dans le sens opposé. Si une partie des électrodes devait former les moyens de guidage entre deux série, ces électrodes de guidage s'useraient plus rapidement. Par conséquent, ces cloisons font en sorte que les électrodes s'usent pratiquement uniformément.

En prévoyant les électrodes dans un réservoir ayant un fond en pente et que le réservoir ait une entrée de lisier du côté du haut de la pente, un flux de lisier est réalisé dans le réservoir, sans devoir utiliser des pompes.

La présente invention est également relative à un procédé de traitement de lisier, dans lequel on soumet le lisier à un traitement électrolytique avec électrodes, caractérisé en ce que l'on applique le lisier dans des électrodes solubles en alliage de magnésium.

De préférence, après le traitement électrolytique, on ajoute de la chaux au lisier. Ceci permet de parfaire encore l'élimination des résidus d'ammoniac encore présent à ce stade d'épuration.

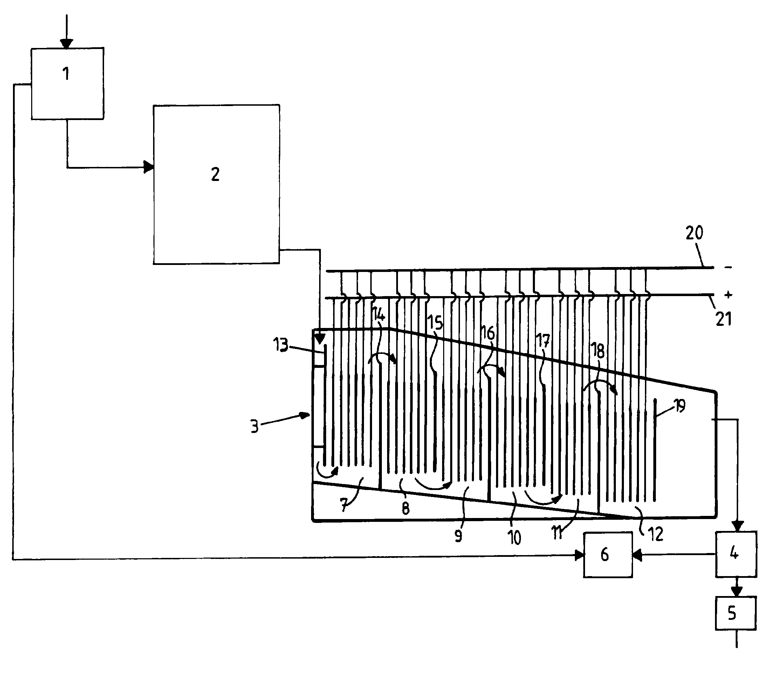

Des détails concernant l'invention sont décrits ci-après faisant référence à l'unique figure, illustrant schématiquement un dispositif de traitement selon une forme de réalisation préférentielle de l'invention.

Dans une première étape, le lisier est amené dans un séparateur mécanique 1, en particulier un système de centrifuges, permettant d'éliminer toute particule dont la dimension est supérieure à 100 microns. Par cette étape, on obtient une première partie, relativement sèche, contenant des composés pouvant être composté tels que de l'azote, du phosphate et de la potasse, et une deuxième partie, liquide, exempté d'éléments pouvant gêner le processus d'électrolyse.

La partie liquide est ensuite stockée dans une cuve 2, avant d'être amenée dans le réservoir d'électrolyse 3 selon l'invention. Le réservoir est divisé en plusieurs compartiments, délimités par des cloisons 13 à 19. Dans les compartiments se situent des séries d'électrodes 7 à 12. Chaque électrode est relié à une des bornes 20 et 21 d'une source d'énergie. Des électrodes adjacentes sont raccordés à des bornes différentes.

Les électrodes des séries 7, 9 et 11 sont par exemple du type fer ou aluminium, tandis que les électrodes des séries 8, 10 et 12 contiennent du magnésium. Les électrodes en fer ou aluminium permettent de transformer l'ammoniac dans ses éléments constitutifs sous forme gazeuse, soit l'azote et l'hydrogène, l'azote se libérant à l'anode, l'hydrogène à la cathode. Cependant, l'action seule du courant électrique à ces électrodes, aussi puissant soit-il, ne permet pas de libérer complètement ces éléments.

En prévoyant des électrodes en alliage de magnésium, l'ammoniac encore présent, est précipité en phosphate-ammoniaco-magnésium (MgNH₄PO₄), relativement insoluble dans les conditions de pH utilisées, à savoir un pH au dessus de 8. Le phosphate est présent dans le lisier sous forme organique et minéral, tous deux solubles en présence de magnésium et d'ammoniac.

En outre, afin de parfaire l'action bactéricide du courant électrique, un ou plusieurs compartiments de la cellule peuvent être équipés d'électrodes insolubles en carbone ou en graphite ou, plus avantageusement, d'électrodes en titane recouvertes d'une couche de phosphate mixte de calcium et de sodium obtenu par trempage dans un milieu fondu de cesdits phosphates. Les électrodes ainsi obtenues présentent un haut pouvoir catalytique et libèrent de l'oxygène naissant, très réactionnel au niveau anodique. Cet oxygène permet de libérer des ions (CIO)⁻ en présence de chlorures présents en grande quantité dans tout type de lisiers.

Bien que généralement peu utilisée, une addition de floculant du type organique, anionique ou cationique peut être prévue, en vue d'obtenir une séparation efficace des composés insolubilisés produits par le système.

La tension électrique appliquée est généralement comprise entre 4V et 24V, dépendant du système choisi, soit en électrodes toutes raccordées au générateur de courant, soit fonctionnant sur le monde bien connu de la bipolarité. En outre, une inversion périodique de la polarité peut être utilisée, ceci facilitant le décrochage des particules généralement constatées au niveau cathodique. La cellule ou le réservoir d'électrolyse 3 peut également être équipé de rampes d'injection d'eau sous une pression de 3 à 4 bars, ce qui correspond généralement à la pression de l'eau de ville. Le rinçage périodique des électrodes permet également un rendement plus efficace du système.

Le mélange eaux/boues obtenu est déchargé de façon séquentielle et est stocké dans une cuve 4 pour filtration ultérieure.

Pour parfaire encore l'élimination des résidus d'ammoniaque encore présents à ce stade d'épuration, une addition de chaux est également prévue dans la cuve 4; ceci, par effet de "stripping" élimine complètement tout ion NH₄⁺ pouvant encore se retrouver à ce stade ultime de traitement. En d'autres mots, en ajoutant de la chaux on va augmenter le pH et ainsi dégager dans l'air l'ammoniac, qui passe de la forme liquide à la forme gazeuse.

Les lisiers, ainsi traités, c'est-à-dire débarrassés de leur ammoniac présentent un double avantage :
1. Ils sont débarrassés de leur odeur nauséabonde, désagréable surtout par forte chaleur.
2. Ils ne présentent qu'une fraction minime de nitrates, ceux-ci provenant essentiellement d'une oxydation partielle au cours des différents stades de traitement de l'azote organique.

Un autre avantage du procédé décrit consiste essentiellement à réduire le rapport DCO/DBO₅ de façon telle qu'il soit compris entre 3 et 5. Ayant donc réduit fortement la valeur en DCO, notamment la DCO dite "dure" et n'ayant que très peu réduit le DBO₅, l'application d'un système d'épuration par voie biologique peut maintenant être envisagée. Il n'est en effet plus nécessaire de faire fonctionner le système en phase aérobie et anaérobie, seule la première phase d'oxydation est utilisée.

Le dispositif selon l'invention peut en outre être monté de façon à être déplacé de site en site. Il peut être complété par un ou plusieurs équipements annexes lorsque les normes de rejet sont très sévères, à savoir plus précisément, un ou plusieurs filtres 5 à charbon actif, des résines mixtes, une ultra ou nanofiltration ou tout autre système équivalent tendant à réduire les polluants organiques.

Les parties solides provenant du séparateur mécanique 1 et de la cuve 4 sont mélangées et traitées dans un dispositif 6 approprié et ensuite agencé par exemple sous forme de granulés pouvant être épandus sur des terrains agricoles.

## Revendications

1. Dispositif de traitement de lisier comprenant un système électrolytique avec des séries d'électrodes, caractérisé en ce qu'au moins une partie des électrodes est constituée par des électrodes solubles en alliage de magnésium.

2. Dispositif selon la revendication 1, dans lequel les séries d'électrodes comportent deux séries de compositions différentes, une première série constituant les électrodes solubles en alliage de magnésium et une deuxième série d'électrodes, en particulier composées de fer.

3. Dispositif selon l'une des revendications précédentes, dans lequel chacune des séries d'électrodes est montée entre deux cloisons, les cloisons étant agencées à guider le lisier provenant d'un sens dans le sens opposé.

4. Dispositif selon l'une des revendications précédentes, dans lequel les électrodes sont prévues dans un réservoir ayant un fond en pente et le réservoir à une entrée de lisier du côté du haut de la pente.

5. Dispositif selon l'une des revendications précédentes, dans lequel les électrodes comportent des électrodes insolubles en carbone ou graphite.

6. Dispositif selon l'une des revendications précédentes, dans lequel les électrodes comportent des électrodes insolubles en titane recouvertes d'une couche de phosphate mixte de calcium et de sodium.

7. Dispositif selon l'une des revendications précédentes, dans lequel les électrodes sont connectées à une source d'énergie ayant des bornes, ladite source d'énergie permettant d'inverser périodiquement la polarité des bornes.

8. Procédé de traitement de lisier, dans lequel on soumet le lisier à un traitement électrolytique avec électrodes, caractérisé en ce que l'on applique le lisier dans des électrodes solubles en alliage de magnésium.

9. Procédé de traitement de lisier selon la revendication 8, dans lequel, après le traitement électrolytique, on ajoute de la chaux au lisier.
